# EUROPÄISCHE PATENTANMELDUNG

(11) **EP 4 155 432 A1**
(43) Veröffentlichungstag der Anmeldung: **29.03.2023**
(21) Anmeldenummer: 21199190.6
(22) Anmeldetag: 27.09.2021
(51) Int. Cl.: C25B 1/04, C25B 15/08

(54) **VERFAHREN ZUM BETRIEB EINER ELEKTROLYSEANLAGE, REKOMBINATOR UND VERWENDUNG EINES REKOMBINATORS IN EINER ELEKTROLYSEANLAGE**

(71) Anmelder: Siemens Energy Global GmbH & Co. KG, 81739 München (DE)
(72) Erfinder: Wolf, Erik, 91341 Röttenbach (DE); Hanebuth, Marc, 90482 Nürnberg (DE); Tremel, Alexander, 91096 Möhrendorf (DE)

(57) **Zusammenfassung**

Die Erfindung betrifft ein Verfahren zum Betrieb einer Elektrolyseanlage (1) umfassend einen Elektrolyseur (3) zur Erzeugung von Wasserstoff (H₂) und Sauerstoff (O₂) als Produktgase, wobei ein Produktgasstrom (5) in einem Phasengemisch umfassend Wasser (H₂O) sowie ein jeweiliges Produktgas mit einem Anteil eines Fremdgases gebildet wird. Wenigstens einem Produktgasstrom (5) wird eine Rotation aufgeprägt, so dass in dem Phasengemisch eine Phasentrennung von Wasser (H₂O) und Produktgas bewirkt wird, und wobei das Produktgas einer katalytisch aktiven Zone (7) zugeführt wird, so dass Fremdgas mit dem Produktgas zu Wasser (H₂O) rekombiniert wird.

Die Erfindung betrifft weiterhin einen Rekombinator (15) zur Reinigung eines Produktgasstroms (5) aus der Wasserelektrolyse sowie eine Verwendung des Rekombinators (15) in einer Elektrolyseanlage (1), die einen Elektrolyseur (3) zur Erzeugung von Wasserstoff (H₂) und Sauerstoff (O₂) als Produktgase umfasst.

## Beschreibung

Verfahren zum Betrieb einer Elektrolyseanlage umfassend einen Elektrolyseur zur Erzeugung von Wasserstoff und Sauerstoff als Produktgase, wobei ein Produktgasstrom in einem Phasengemisch umfassend Wasser sowie ein jeweiliges Produktgas mit einem Anteil eines Fremdgases gebildet wird. Die Erfindung betrifft weiterhin einen Rekombinator zur Reinigung eines Produktgasstroms aus der Wasserelektrolyse und die Verwendung eines Rekombinators in einer Elektrolyseanlage.

Wasserstoff wird heutzutage beispielsweise mittels Proton Exchange Membrane (PEM)-Elektrolyse oder alkalischer Elektrolyse erzeugt. Die Elektrolyseure produzieren mit Hilfe elektrischer Energie Wasserstoff und Sauerstoff aus dem zugeführten Wasser.

Ein Elektrolyseur weist dabei in der Regel eine Vielzahl von Elektrolysezellen auf, welche benachbart zueinander angeordnet sind. Mittels der Wasserelektrolyse wird in den Elektrolysezellen Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Das Wasser wird dabei in der Regel von einer Unterseite in den Anodenraum und/oder Kathodenraum gefördert.

Dieser Elektrolyseprozess findet in dem so genannten Elektrolysestack, zusammengesetzt aus mehreren Elektrolysezellen, statt. In dem unter DC Spannung stehenden Elektrolysestack wird als Edukt Wasser eingebracht, wobei nach dem Durchlauf durch die Elektrolysezellen zwei Fluidströme, bestehend aus Wasser und Gasblasen (Sauerstoff O₂ bzw. Wasserstoff H₂) austreten. Die jeweilige Trennung der Wasser- und Gasphase in den Fluidströmen erfolgt in so genannten Gasabscheidern oder Gas-Separatoren.

In der Praxis befinden sich im Sauerstoffgasstrom dabei kleine Mengen an Wasserstoff und im Wasserstoffgasstrom kleine Mengen an Sauerstoff als Fremdgas. Die Quantität des jeweiligen Fremdgases in dem jeweiligen Produktgasstrom hängt vom Elektrolyse-Zelldesign ab und variiert auch unter dem Einfluss von Stromdichte, Katalysatorzusammensetzung, Alterung und bei einer PEM-Elektrolyseanlage hängt es auch vom Membranmaterial ab. Systemimmanent ist dabei, dass im Gasstrom des einen Produktgases jeweils das andere Produktgas in sehr geringen Mengen vorliegt. Im weiteren Prozessverlauf werden in der Regel in nachgeschalteten Schritten der Gasreinigung selbst geringe Sauerstoffspuren aus dem Wasserstoff mit zum Teil sehr aufwändigen und kostenintensiven Reinigungsschritten entfernt, insbesondere wenn eine besonders hohe Produktgasqualität gefordert ist, wie dies etwa bei der Nutzung des Wasserstoffs, z.B. für Brennstoffzellen, der Fall ist.

Beispielsweise können in einer Elektrolyseanlage zur Gasreinigung der Produktgasströme aus dem Elektrolyseur insbesondere beide Produktgasströme einem jeweiligen, katalytisch aktivierten Rekombinator zugeführt werden, in dem ein Katalysator den Wasserstoff mit dem Sauerstoff zu Wasser rekombinieren lässt (DeOxo-Einheit), so dass der jeweilige Produktstrom in Wasser rekombiniert. Dazu muss der Gasstrom zuvor auf mindestens 80°C aufgeheizt werden, damit die Umsatzraten des Rekombinators ausreichend hoch sind und somit die geforderte Gasreinheit erreicht wird. Die dafür genutzte verfahrenstechnische Anlage ist jedoch recht teuer und reduziert auf Grund ihres Energiebedarfs den Systemwirkungsgrad der gesamten Elektrolyseanlage. Eine weitere Möglichkeit zur Behandlung der Fremdgasproblematik besteht darin, rekombinationsaktive Oberflächen innerhalb der Elektrolysezelle durch spezielle Behandlungsmaßnahmen zu erzeugen. Diese zellinternen Rekombinationskatalysatoren sind allerdings unter ökonomischen Gesichtspunkten sehr aufwändig und daher unvorteilhaft.

Deswegen ist bereits auf die Reinheit und Qualität der im Elektrolyseur zunächst entstehenden und aus dem Elektrolyseur abgeführten Produktgasströme zu achten, auch um neben Betriebssicherheitsaspekten auch die Kosten und den Aufwand für die nachfolgenden Reinigungsschritte noch in vertretbarem Rahmen zu halten.

Die Reinheit bzw. Qualität der beiden Produktgasströme der ursprünglich im Elektrolyseur produzierten Gase ist dabei von vielen Parametern abhängig und kann sich auch im Laufe des Betriebs einer Elektrolyseanlage ändern. Problematisch und besonders sicherheitsrelevant ist hierbei einerseits, wenn sich die Konzentration von Sauerstoff in Wasserstoff erhöht, andererseits aber auch, wenn sich die Konzentration von Wasserstoff in Sauerstoff erhöht. Wird hier ein bestimmtes Konzentrationslimit überschritten, so besteht ein Gefahrenpotential durch die Ansammlung zündfähiger Gasgemische. Dies erfolgt vor allem im jeweiligen Gas-Separator (Behälter) unmittelbar stromab der Elektrolyse, so kann beispielsweise das produzierte Sauerstoffgas nicht mehr für weitere Zwecke übergeben werden. Steigt der Anteil von Wasserstoff im Sauerstoff-Produktgas weiter, dann kann sogar ein brennbares bzw. explosives Gemisch entstehen. Dann herrscht in dem Gas-Separator (Behälter) ein potenziell gefährlicher Betriebszustand, den es aus Sicherheitsgründen unbedingt zu vermeiden gilt. Dies gilt entsprechend auch auf der Wasserstoffseite.

Daher ist eine zuverlässige und kontinuierliche Überwachung der Gasqualität der Produktgase im Betrieb des Elektrolyseanlage unerlässlich. Dies gilt in besonderer Weise auch auf der Sauerstoffseite des Elektrolyseurs, das heißt die Überwachung der Konzentration von Wasserstoff als Fremdgasbestandteil, in dem bei der Elektrolyse produzierten Sauerstoff. Die Überwachung und entsprechende Betriebsführung stellt eine wichtige Schutzvorkehrung dar, um kritische Betriebszustände zu erkennen und um Sicherheitsmaßnahmen bis hin zum temporären Abschalten der Elektrolyseanlage zu ergreifen. Entsprechende Vorkehrungen sind auch auf der Wasserstoffseite zu treffen, d.h. die Überwachung der Konzentration von Sauerstoff als Fremdgasbestandteil in dem produzierten Wasserstoff bereits vor einer nachgeschalteten aufwändigen Gasreinigungsanlage (DeOxo-Einheit), ist auch wasserstoffseitig eine wichtige Schutzvorkehrung.

Der Erfindung liegt daher die Aufgabe zugrunde, ein neuartiges Verfahren zur Reduzierung des Fremdgases in einem Produktgasstrom einer Wasserstoffelektrolyseanlage vorzuschlagen. Eine weitere Aufgabe der Erfindung besteht in der Angabe einer Vorrichtung, mit der eine besonders effektive Reduzierung des Fremdgases in einem Produktgasstrom einer Wasserstoffelektrolyseanlage erreichbar ist.

Die auf ein Verfahren gerichtete Aufgabe wird erfindungsgemäß gelöst durch Verfahren zum Betrieb einer Elektrolyseanlage umfassend einen Elektrolyseur zur Erzeugung von Wasserstoff und Sauerstoff als Produktgase, wobei ein Produktgasstrom in einem Phasengemisch umfassend Wasser sowie ein jeweiliges Produktgas mit einem Anteil eines Fremdgases gebildet wird, wobei wenigstens einem Produktgasstrom eine Rotation aufgeprägt wird, so dass in dem Phasengemisch eine Phasentrennung von Wasser und Produktgas bewirkt wird, und wobei das Produktgas einer katalytisch aktiven Zone zugeführt wird, so dass Fremdgas mit dem Produktgas zu Wasser rekombiniert wird.

Die Elektrolyseanlage kann hierbei eine Hochdruckelektrolyseanlage oder eine Niederdruckelektrolyseanlage sein, die ausgelegt ist für eine PEM-Elektrolyse oder für alkalische Elektrolyse.

Mit Produktgas wird hierbei der in der Elektrolyseanlage hergestellte Sauerstoff oder Wasserstoff bezeichnet. Unter Produktgasstrom wird der sauerstoffseitige- oder wasserstoffseitige Strom verstanden, der neben dem jeweiligen Produktgas u.a. auch weitere Komponenten enthalten kann, z.B. Wasser oder das jeweilige Produkt-Fremdgas.

Die Erfindung geht hierbei bereits von der Erkenntnis aus, dass bisher vorgeschlagene externe, d.h. nachgelagerte Verfahren der Gasreinigung und Aufbereitung der Produktgase Wassersoff und Sauerstoff einer Elektrolyseanlage sehr aufwändig und kostenintensiv sind. Aber auch zellinterne Maßnahmen zur Reduzierung des ursächlichen internen Gasübertritts innerhalb der Elektrolysezelle durch die Membran, etwa zur Unterdrückung des Wasserstoffübertritts von dem Kathodenraum in den sauerstoffseitigen Anodenraum sind nachteilig. So wurde beispielsweise vorgeschlagen, an der Membranoberfläche anodenseitig, d.h. auf der Sauerstoffseite, einen zusätzlichen Ionomer-Anteil aufzubringen, was aufgrund des Materialeinsatzes von Iridium kostspielig ist und überdies zu Effizienzeinbußen führt. Weiterhin wurden zellinterne Rekombinationskatalysatoren vorgeschlagen, die aber zur schnelleren Degradation und damit Alterung der Elektrolysezelle führen können. Auch der Einsatz dickerer Membranen als Diffusionssperre zur Trennung von Anodenraum und Kathodenraum wird als Maßnahme genannt mit Nachteilen für die Effizienz der Elektrolyseanlage.

Die Erfindung basiert auf der Grundidee zunächst eine Phasentrennung im Produktgasstrom selbst vorzunehmen, d.h. Wasser und Produktgas zu separieren und danach wird im Produktgas das Fremdgas gezielt und selektiv katalytisch zu entfernen. Somit muss vorteilhafterweise nicht das gesamte Phasengemisch einer Gasreinigung unterzogen werden, um das Fremdgas aus dem Phasengemisch zu entfernen. Die Phasentrennung wird durch eine Drallströmung oder Rotation bewirkt, die dem Produktgasstrom aufgeprägt wird, und zwar unter Ausnutzung der Separationseffekte bei der Stofftrennung analog eines Fliehkraftabscheiders. Das Phasengemisch wird durch eine gezielt aufgeprägte Rotation auf den Produktgasstrom - als Träger der zu trennenden Phasen bzw. Partikel - aufgrund ihrer eigenen Strömungsgeschwindigkeit in eine Drehbewegung versetzt.

Die flüssige Phase des Wassers und die Gasphase der Produktgases werden so aufgrund der Partikelmasse oder Dichteunterschiede räumlich getrennt. Eine in-situ Drall- bzw. Rotations-basierte räumliche Trennung der Phasen in dem Phasengemisch kombiniert mit einer selektiven katalytischen Gasreinigung des Produktgases ist erreicht. Die Gasreinigung erfolgt durch einen Rekombinationsprozess, indem gezielt nur das Produktgas der katalytisch aktiven Zone zugeführt wird, wo es mit dem Fremdgas zu Wasser rekombiniert, so dass das Produktgas von dem Fremdgas gereinigt ist. Von besonderem Vorteil ist, dass mit diesem Gasreinigungskonzept im Betrieb einer Elektrolyseanlage sowohl Wasserstoff als Fremdgas in dem Sauerstoff-Produktgas effizient entfernt werden kann, also auch umgekehrt Sauerstoff als Fremdgas in einem Wasserstoff-Produktgas. Das Verfahren ist flexibel anwendbar, kostengünstig und einfach umsetzbar und erfordert keinen lebensdauerverringernden Eingriff in die Elektrolysezelle, wie die oben beschriebenen Zellinternen Maßnahmen. Aber auch gegenüber bekannten externen Gasreinigungs- und Gasaufbereitungsmaßnahmen hat die Erfindung erhebliche Vorteile für den Betrieb einer Elektrolyseanlage, insbesondere da auch große Fremdgaskonzentrationen im jeweiligen Produktgas, etwa aufgrund von Membrandurchbrüchen, sicher beherrscht werden können.

Aufgrund der hohen Reinigungseffizienz des Verfahrens kann das Fremdgas im Produktgas in der Gasphase praktisch vollständig entfernt bzw. katalytisch in der katalytisch aktiven Zone zu Wasser gebunden werden, also beispielsweise Wasserstoff-Fremdgas in Sauerstoff. Von Vorteil ist, dass die entsprechende Mischung nicht zündfähig sein muss, d.h. etwa die Konzentration an Wasserstoff-Fremdgas im Sauerstoff in einem momentanen im Betrieb unterhalb der unteren Explosionsgrenze (UEG) liegen kann. Dies hat den großen Vorteil, dass mit dem effizienten Reinigungsverfahren gemäß der Erfindung im Betrieb der Elektrolyseanlage zündfähige Gemische und Explosionsgefahr bereits prinzipiell vermieden oder gar ausgeschlossen werden können, was die Betriebssicherheit der Anlage und die Standzeit erhöht.

In besonders vorteilhafter Ausgestaltung des Verfahrens wird der Produktgasstrom in einer axialen Strömungsrichtung geführt, wobei bezogen auf die axiale Strömungsrichtung die Phasentrennung derart ausgeführt wird, dass das Wasser in einen radial äußeren Bereich und das Produktgas in einen radial inneren Bereich gefördert wird.

In einem zylindrischen Koordinatensystem betrachtet entspricht die axiale Strömungsrichtung der z-Achse und eine radiale Koordinate eines Punkts ist durch den radialen, senkrecht zur z-Achse ermittelten Abstand und einem Drehwinkel bestimmt. Die Rotationsgeschwindigkeit eines Teilchens im Produktgasstrom wird durch den Drehwinkel und Drehgeschwindigkeit beschrieben. Die durch den Drall bzw. durch die Rotation induzierte räumliche Phasentrennung erfolgt in dem Phasengemisch eine Stofftrennung der flüssigen Phase von der gasförmigen Phase, wobei aufgrund der Masse bzw. Dichte der Stoffe das Wasser in den radial äußeren Bereich gefördert wird und das Produktgas radial einwärts zur z-Achse hin zentral in den radial inneren Bereich gefördert wird, wo sich die katalytisch aktive Zone befindet. Bei der Phasentrennung und Gasreinigung wird für die zu erzielende Bewegungsdynamik einer Rotation der Effekt ähnlich eines Zyklon-Abscheiders ausgenutzt.

Dem in einer axialen Richtung strömenden Produktgasstrom in dem Phasengemisch bzw. dem Gemisch aus Produktgas und Wasser wird eine tangentiale Bewegungskomponente aufgeprägt und der Produktgasstrom damit auf eine kreisförmige Bahn gebracht. Durch Radialkräfte radial einwärts zur z-Achse hin und Verringerung der Radialkomponente nimmt die Drehgeschwindigkeit dermaßen zu, dass die schwereren Wasserteilchen durch die Fliehkraft nach außen geschleudert und abgebremst werden. Das leichtere Produktgas hingegen wird in den inneren Bereich in die katalytische aktive Zone gefördert und gereinigt.

In bevorzugter Ausführung des Verfahrens wird in der katalytisch aktiven Zone erzeugte Rekombinationswärme auf das im radial äußeren Bereich strömenden Wasser übertragen, so dass die katalytisch aktive Zone gekühlt wird.

Somit ist eine sehr vorteilhafte intrinsische Kühlung der katalytisch aktiven Zone erreicht, die von dem Wasser als Kühlmedium im radial äußeren Bereich teilweise oder vollständig umströmt wird. Die entstehende hohe Prozesswärme infolge der katalytischen Rekombination von Wasserstoff und Sauerstoff zu Wasser kann dadurch aus der katalytisch aktiven Zone und aus dem radial inneren Bereich in den radial äußeren Bereich übertragen werden. Eine unmittelbare Überhitzung der katalytisch aktiven Zone und eventuell mittelbare Überhitzung weiterer radialer Bereiche oder begrenzender Elemente, wie beispielsweise begrenzende Wandelemente, außerhalb des radial äußeren Bereichs ist ohne weitere Maßnahmen hierdurch vermieden. Durch die Wärmeaufnahme und den Wärmetransport des umströmenden Wassers im radial äußeren Bereich, ist eine besonders wirksame thermische Entkopplung der katalytisch aktiven Zone und weiterer radialer Bereiche erreicht. Zugleich ist dadurch der hier vorgeschlagene reaktive Gasreinigungsprozess intrinsisch eigensicher.

In weiter bevorzugter Ausführung des Verfahrens wird eine Ausbreitung der Reaktion aus der katalytisch aktiven Zone unterdrückt, so dass Flammenrückschläge gelöscht werden.

Durch Maßnahmen zur räumlichen Begrenzung und des Einschlusses der Rekombinationsreaktion auf die katalytisch aktive Zone wird eine erhöhte Sicherheit gegenüber Flammenrückschlag bei dem Verfahren erzielt. Geeignete Maßnahmen zur räumlichen Reaktionsbegrenzung sind beispielsweise die Anwendung von so genannten Quench-Prozessen in der chemischen Reaktionsführung, was das schnelle Abstoppen (Löschen), Verlangsamen oder Unterdrücken einer ablaufenden Reaktion bedeutet. Dies kann geschehen durch das schnelle Hinzufügen eines weiteren Reaktionspartners, gelegentlich auch als Quencher bezeichnet, welcher eines der Edukte aus dem Reaktionsgemisch entfernt, durch eine Abkühlung, die die Geschwindigkeit der ablaufenden Reaktion so stark verringert, dass sie als nahezu gestoppt gilt, oder aber durch schnelle und starke Verdünnung, welche die Wahrscheinlichkeit der Reaktion zweier Reaktanten stark herabsetzt. Bevorzugt wird hier die Anwendung mechanischer Elemente in der katalytisch aktiven Zone zur Reaktionsbegrenzung als Möglichkeit vorgeschlagen, da diese einfacher umsetzbar ist.

Vorzugsweise wird die katalytisch aktive Zone auf eine Aktivierungstemperatur aufgeheizt, so dass die Rekombinationsreaktion in Gang gesetzt wird.

Eine Aktivierung der Rekombinationsreaktion durch gesondertes Aufheizen der katalytisch aktiven Zone ist vorteilhaft, insbesondere falls der Produktgasstrom aus dem Elektrolyseur nicht bereits ein ausreichend hohes Temperaturniveau aufweist, so dass eine intrinsische Aktivierung der Reaktion gegeben wäre und die Aktivierungsenergie bereits zur Verfügung steht. Das Aufheizen auf eine Aktivierungstemperatur ist dabei vorteilhafterweise nur temporär erforderlich. Sobald die Rekombinationsreaktion in Gang gesetzt ist, wird diese von allein weiterlaufen, da die Rekombinationsreaktion von Wasserstoff und Sauerstoff zu Wasser in der katalytisch aktiven Zone exotherm ist. Es wird im normalen Betrieb mithin kontinuierlich Reaktionswärme erzeugt.

In besonders bevorzugter Ausgestaltung des Verfahrens wird eine Aktivierungstemperatur eingestellt, die um 10 K bis zu 100 K, vorzugsweise um etwa 30 K bis 80 K, oberhalb der Temperatur des Phasengemischs des Produktgasstroms liegt. Das erforderliche Temperaturniveau wird durch entsprechende Wärmezufuhr beispielsweise aus einer externen Wärme- bzw. Energiequelle und lokalem Wärmeeintrag in die katalytisch aktive Zone gewährleistet. Die Aktivierungswärme kann alternativ auch direkt und unmittelbar in der katalytisch aktiven Zone erzeugt und bereitgestellt werden.

In weiter bevorzugter Ausgestaltung des Verfahrens wird ein Druck und/oder eine Temperatur und/oder ein Volumenstrom am Eingang und/oder Ausgang der katalytisch aktiven Zone ermittelt und der ermittelte Messwert in einer Kontrolleinheit verarbeitet.

Dabei geht es vorliegend um eine mittelbare oder unmittelbare Bestimmung oder Ermittlung von für die Verfahrensführung charakteristischer lokaler Messgrößen, die auf den aktuellen Betriebszustand in der katalytisch aktiven Zone schließen lassen. Durch geeignete Messprozeduren umfassend vorzugsweise die Messung und Verarbeitung von Druck, Temperatur und Volumenstrom kann vorteilhafterweise z.B. auf die Fremdgaskonzentration im Produktgasstrom vor und nach der katalytisch aktiven Zone geschlossen werden und damit auf die Effizienz des katalytischen Gasreinigungsprozesses.

Die auf eine Vorrichtung gerichtete Aufgabe wird erfindungsgemäß gelöst durch einen Rekombinator zur Reinigung eines Produktgasstroms aus der Wasserelektrolyse, umfassend einen Einströmbereich mit einem Einlass und eine bezogen auf eine axiale Strömungsrichtung stromabwärts des Einströmbereichs angeordnete katalytisch aktive Zone, an die sich ein Ausströmbereich mit einem Auslass anschließt, so dass ein Strömungskanal gebildet ist, wobei in dem Einströmbereich ein Drallelement angeordnet ist und die katalytisch aktive Zone einen Katalysator aufweist, der für eine axial-mittige Durchströmung des Strömungskanals mit dem Produktgas ausgelegt ist.

Der Rekombinator ist in besonderer Weise vorteilhaft und effizient einsetzbar und implementierbar in eine Elektrolyseanlage, etwa zur Reinigung eines Produktgasstroms aus der Wasserelektrolyse. Insoweit ergeben sich Aspekte und Vorteile des oben beschriebenen Verfahrens in entsprechender Weise aus der Anwendung des Rekombinators und sind mit dem Rekombinator realisierbar. Der Einsatz beschränkt sich aber nicht auf Anwendungen bei der Wasserelektrolyse. Vielmehr sind unterschiedliche Anwendungen des Rekombinators möglich, wo die Aufgabe besteht Phasen- oder Teilchengemische unterschiedlicher Masse oder Dichte zu trennen und zugleich katalytisch aufzureinigen.

Mit dem Rekombinator ist ein beispielsweise rohrförmiger oder zylindrischer Strömungskanal bereitgestellt, mit dem einerseits durch das Drallelement eine Phasentrennung im Produktgasstrom von Wasser und einem Produktgas erreichbar ist, und andererseits zugleich auch eine katalytische Gasreinigung des Produktgases durch chemische Bindung eines Fremdgases. In einem einzigen aktiven Strömungselement, dem Rekombinator, sind also zwei Funktionen vorteilhaft integriert. Hinzu kommt die baulich einfache Integrierbarkeit in ein Leitungs-, Rohr- oder sonstiges Fördersystem für gemischte Stoffströme einer Industrieanlage, insbesondere einer Elektrolyseanlage.

Für eine zu erzielende Phasentrennung arbeitet der Rekombinator dabei in gewisser funktionaler Anlehnung an einen Tangential-Zyklonabscheider und macht sich dieses Grundprinzip zu Nutze, passt dieses Prinzip aber vorteilhaft an die spezifischen Anforderungen einer Fremdgasabscheidung aus einem Phasengemisch in Kombination mit einer katalytischen Funktionalität an. Dabei ist in dem Einströmbereich des Rekombinators, der beispielsweise zylindrische, kegelförmige oder eine gekrümmte Kontur aufweisen kann und zugleich als Einlaufzylinder fungiert, das Drallelement angeordnet. Das Drallelement ist vorzugsweise als eine Drallschaufel ausgeführt, um eine tangentiale Geschwindigkeitskomponente und damit eine Rotation auf ein einströmendes Produktgas aufzuprägen.

Über den Einlaufbereich des Rekombinators ist das Phasengemisch mittels des Drallelements mithin tangential zuführbar und kann auf eine kreisförmige Bahn, insbesondere eine zyklonförmige Bahn, gezwungen werden. Durch den Zykloneffekt wird bei Beaufschlagung des Rekombinators mit einem Produktgas das Produktgas radial-einwärts in die katalytisch aktive Zone transportiert und mit dem Katalysator in Kontakt gebracht. Hierdurch ist der Rekombinator für eine axial-mittige Durchstömung des Strömungskanals konfektioniert, womit sich die katalytische Reaktion auf den axial-mittigen Bereich als Reaktionsraum beschränkt, die den Katalysator aufweist. Der Ausströmbereich kann dabei als separater räumlicher Bereich des Strömungskanals ausgestaltet sein, in dem nach Durchlaufen der katalytisch aktiven Zone sich die getrennte flüssige und gasförmige Phase wieder mischen können, die aber dann vom Fremdgas in dem Produktgas befreit sind. Es ist aber auch möglich, dass der Ausströmbereich bereits als ein in Strömungsrichtung axial nachgeordneter ein Teilbereich der katalytisch aktiven Zone ausgelegt und in diese funktional integriert ist. Dadurch ist eine kompaktere Bauweise für den Rekombinator möglich, insbesondere durch Realisierung einer geringeren axialen Baulänge. Je nach der Trennaufgabe, der Einsatzsituation und Zusammensetzung des Produktgasstroms ist der Rekombinator flexibel auslegbar und anpassbar hinsichtlich spezifischer Ausgestaltung des Einströmbereichs, des Drallelements, der katalytisch aktiven Zone und des Ausströmbereichs.

In besonders bevorzugter Ausgestaltung umfasst der Rekombinator ein Befestigungselement, mit dem der Katalysator in dem Strömungskanal für eine zentral-mittige Durchströmung zentriert gehaltert ist, wobei ein Ringraum für eine Umströmung des Katalysators gebildet ist.

Eine Ausgestaltung des Befestigungselements beispielsweise als Lagerstern mit einer Anzahl von radial ausgerichteten Stegen oder Speichen ist möglich und vorteilhaft. Die Stege sind mit einer zentralen zylinderförmigen Halterung verbunden, z.B. in Form eines Hohlzylinders, die zur Aufnahme, Befestigung und Positionierung des Katalysators dient. Der Ringraum ist dann geometrisch betrachtet ein aus zwei Hohlzylindern gebildeter Raum. Es sind aber je nach Situation auch andere Geometrien möglich. Besonders vorteilhaft erweist sich, dass der Ringraum für eine Umströmung des Katalysators ausgelegt ist, so dass dieser für Kühlungszwecke nutzbar ist. Somit kann etwa bei Beaufschlagung des Ringraums mit Wasser oder einem anderen Kühlmedium eine effektive Kühlung des Katalysators erfolgen und die Rekombinationswärme aus dem Katalysatormaterial bzw. der katalytisch aktiven Zone durch Wärmeübertragung an das Kühlmedium abgeleitet werden.

In weiter bevorzugter Ausgestaltung des Rekombinators ist in der katalytisch aktiven Zone eine Quencheinrichtung angeordnet, die den Katalysator einströmseitig und ausströmseitig jeweils begrenzt, so dass ein Flammenrückschlag unterdrückt ist.

Von Vorteil und besonders einfach ist die Ausgestaltung der Quencheinrichtung als mechanischer Flammenrückschlagschutz, beispielsweise als ein Quenchsieb aus einem metallischen Material. Ein Quenchsieb gestattet eine weitgehend ungehinderte Durchströmung des Strömungskanals und bietet einen effektiven Schutz vor Flammenrückschlag. Durch die beiderseitige Anordnung des Quenchsiebs einströmseitig sowie ausströmseitig ist ein vollständiger Einschluss bzw. räumliche Begrenzung der Rekombinationsreaktion in der katalytisch aktiven Zone erzielbar.

Weiter bevorzugt umfasst der Rekombinator eine Messeinrichtung mit der ein Druck und/oder eine Temperatur und/oder ein Volumenstrom am Eingang und/oder Ausgang der katalytisch aktiven Zone ermittelbar ist.

Für die Messaufgabe kommen vielfältige Sensoren, Messfühler oder Sonden in Betracht, die unmittelbar am Katalysator, oder möglichst in der Nähe der katalytisch aktiven Zone stromaufwärts bzw. stromabwärts im Strömungskanal positioniert sind, um die Zustände möglichst zuverlässig zu überwachen. Dies können Messstellen sein, die entsprechend mit eine Kontroll- und Auswerteeinheit verbindbar sind.

Bevorzugt wird der ermittelte Druck bzw. die ermittelte Temperatur oder der Volumenstrom (Durchflussmessung) in einer Kontrolleinheit mit einem jeweiligen Referenzwert verglichen und beim Überschreiten eines Referenzwerts können Betriebsparameter des Rekombinators nachgesteuert und die Betriebsführung angepasst werden, etwa durch eine Temperaturregelung oder Durchflussregelung. Von besonderem Vorteil ist die Möglichkeit mit der Messeinrichtung die Rekombinationseffizienz bestimmen zu können, d.h. die Fremdgaskonzentration im Produktgas in-situ als abgeleitete Größe aus den Messwerten. Weiterhin kann der Alterungsprozesse des Katalysators überwacht und verfolgt werden. Es kann ein Überhitzen der katalytisch aktiven Zone erkannt werden, wenn auch die Gefahr der Überhitzung des Katalysators durch das Kühlkonzept intrinsisch, d.h. im Betrieb, weitestgehend vermieden ist.

Weiter bevorzugt weist der Rekombinator zur Aufheizung des Katalysators ein Widerstandsheizelement auf, das einströmseitig zwischen Quencheinrichtung und Katalysator angeordnet ist.

Mit dem Widerstandsheizelement ist bei Inbetriebnahme des Rekombinators die erforderliche Aktivierungswärme zumindest temporär und bedarfsweise dem Katalysator zuführbar, so dass damit der Katalysator auf die erforderliche Betriebstemperatur heizbar ist, um die gewünschte Rekombinationsreaktion in dem jeweiligen Produktgasstrom zu katalysieren. Denkbar ist auch die Anwendung einer Ausheizfunktion für das Widerstandsheizelement, etwa zum Ausheizen der katalytisch aktiven Zone, um diese bei Bedarf thermisch zu reinigen. Auf diese Weise können schädigende Substanzen (Katalysatorgifte), die sich im Betrieb angelagert haben thermisch ausgetrieben oder ausgegast werden. Auf diese Weise ist bei dem Rekombinator mit dem Heizelement zusätzlich eine Regenerierungsfunktion geschaffen.

In besonders bevorzugter Ausgestaltung weist der Katalysator ein Trägermaterial auf Basis eines oxidischen Materials, insbesondere Aluminiumoxid Al₂O₃, auf.

Diese Materialwahl für die Trägermatrix des Katalysators ist vorteilhaft insbesondere für die sauerstoffseitige Aufreinigung eines Produktgasstroms aus der Wasserelektrolyse, also die katalytische Rekombination von Wasserstoff als Fremdgas zu Wasser in dem Sauerstoff-Produktgas, also auf der Anodenseite einer PEM-Elektrolyseanlage

In weiter bevorzugter Ausgestaltung weist der Katalysator ein Trägermaterial auf Basis eines nicht-oxidischen Materials, insbesondere Edelstahl, auf.

Diese Materialwahl ist von Vorteil im Hinblick auf eine wasserstoffseitige Aufreinigung eines Produktgasstroms aus der Wasserelektrolyse, also die katalytische Rekombination von Sauerstoff als Fremdgas zu Wasser in dem Wasserstoff-Produktgas, also auf der Kathodenseite einer PEM-Elektrolyseanlage.

In besonders bevorzugter Verwendung kommt der Rekombinator daher in einer Elektrolyseanlage zur Anwendung, die einen Elektrolyseur zur Erzeugung von Wasserstoff und Sauerstoff als Produktgase aufweist.

Bevorzugt ist insbesondere die Verwendung des Rekombinators innerhalb einer Elektrolysezelle, eines Zellverbundes oder Stacks umfassend eine Vielzahl von Elektrolysezellen.

Weiter bevorzugt ist eine Verwendung des Rekombinators in der Produktgasleitung nach dem Austritt, insbesondere unmittelbar nach dem Austritt, des Phasengemischs aus einer Elektrolysezelle oder eines Zellverbundes oder eines Stacks umfassend eine Vielzahl von Elektrolysezellen.

Weiterhin bevorzugt ist eine Verwendung des Rekombinators innerhalb einer Gasabscheidevorrichtung einer Elektrolyseanlage und/oder in einer der Gasabscheidevorrichtung strömungstechnisch nachgeschalteten Gasauslassleitung.

Im Folgenden wird die Erfindung beispielhaft unter Bezugnahme auf die anliegenden Figuren anhand bevorzugter Ausführungsformen erläutert, wobei die nachfolgend dargestellten Merkmale sowohl jeweils für sich genommen als auch in verschiedenen Kombinationen miteinander einen Aspekt der Erfindung darstellen können. Es zeigen:
- FIG 1: eine schematische Schnittdarstellung eines Rekombinators gemäß der Erfindung;
- FIG 2: eine Draufsicht auf den Einströmbereich des Rekombinators entsprechend FIG 1;
- FIG 3: eine Schnittansicht des Rekombinators entsprechend FIG 1 im Bereich des Befestigungselements;
- FIG 4: beispielhaft eine Elektrolyseanlage zur Wasserelektrolyse mit Rekombinator gemäß der Erfindung.

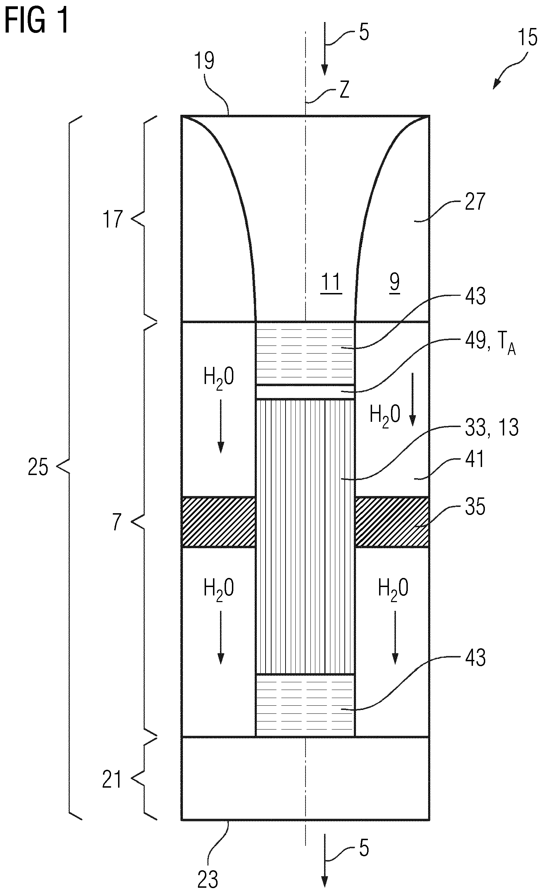

Der in FIG 1 dargestellte Rekombinator 15 erstreckt sich entlang einer z-Achse, die zugleich die axiale Strömungsrichtung bei einer Zufuhr und Beaufschlagung des Rekombinators 15 mit einem Produktgasstrom 5 bildet. Der Rekombinator 15 weist entlang der z-Achse einen Einströmbereich 17 mit einer Einlass 19 auf einen sich an den Einströmbereich 17 entlang der z-Achse anschließende katalytisch aktive Zone 7, an die sich ein Ausströmbereich 21 mit einem Auslass 19 anschließt. Durch diese Elemente ist ein Strömungskanal 25 gebildet, der mit einem Produktgasstrom 5 in der axialen Strömungsrichtung durchströmbar ist. Der Einströmbereich weist ein Drallelement 27 auf, welches sich zu einem radial inneren Bereich 11 erstreckt und in diesen einmündet. Hierdurch ist ein zylinderförmiger Strömungskanal 25 mit einem Ringraum 41 realisiert, bei dem zumindest in der katalytisch aktiven Zone 7 der radial innere Bereich 9 von einem radial äußeren Bereich 9 umgeben und zugleich begrenzt ist. In der katalytisch aktiven Zone 7 ist ein Katalysator 33 entlang der z-Achse zentriert mittels eines Befestigungselements 35 zentriert im radial inneren Bereich 11 angeordnet und in seiner Position gehalten. Der Katalysator 33 weist ein Trägermaterial 13 auf Basis eines oxidischen Materials wie etwa Aluminiumoxid Al₂O₃ auf. Je nach Anwendung und Einbausituation des Rekombinators 15 kann das Trägermaterial 13 des Katalysators 33 auch auf nichtoxidischer Basis gewählt werden, beispielsweise ein Metall wie Edelstahl.

Der Katalysator 33 ist sowohl stromaufwärts als auch stromabwärts an seiner Stirnseite von einer Quencheinrichtung 43 begrenzt. Die Quencheinrichtung 43 ist als metallisches Quenchsieb ausgestaltet und hat die Funktion eine katalytische Rekombinationsreaktion in Strömungsrichtung zu begrenzen, wodurch ein besonders einfacher und effektiver Flammenrückschlagschutz realisiert ist und eine hohe Betriebssicherheit. Ein Widerstandsheizelement 49 ist an dem Katalysator 33 angebracht, welches sich an dem dem Einströmbereich 17 zugewandten Ende des Katalysators 33 befindet. Dadurch ist bedarfsweise eine Aufheizung des Katalysators 33 auf eine erforderliche Aktivierungstemperatur T_{A} bereitgestellt, etwa bei der Inbetriebsetzung des Rekombinators 15, um eine katalytische Reaktion in Gang zu setzen. Der in der katalytisch aktiven Zone 7 gebildete Ringraum 41, der den Katalysator 33 umgibt, ist für ein Fluid durchströmbar, so dass der Katalysator 33 in Strömungsrichtung mit einem Fluid, beispielweise mit Wasser H₂O umströmbar ist, wodurch im Betrieb eine Kühlung des Katalysators 33 erzielbar ist.

Im Betrieb des Rekombinators 15 wird einem in der axialen z-Richtung in den Einströmbereich 17 einströmenden Produktgasstrom 5, der in einem flüssig-gasförmigen Phasengemisch aus einem Produktgas mit einem Fremdgasanteil sowie Wasser H₂O vorliegt, durch das Drallelement 27 eine tangentiale Bewegungskomponente aufgeprägt und der Produktgasstrom 5 damit auf eine kreisförmige Bahn gezwungen. Durch Radialkräfte radial einwärts zur z-Achse hin und Verringerung der Radialkomponente nimmt die Drehgeschwindigkeit dermaßen zu, dass die schwereren Wasserteilchen durch die Fliehkraft nach außen in den radial äußeren Bereich 9 geschleudert und abgebremst werden. Das leichtere Produktgas mit dem Fremdgasanteil hingegen wird in den radial inneren Bereich 11 der katalytisch aktive Zone 7 gefördert. und gereinigt.

Hierbei ist die Grundidee zunächst eine Phasentrennung im Produktgasstrom 5 selbst vorzunehmen, d.h. Wasser H₂O und Produktgas räumlich zu separieren und danach im Produktgas das Fremdgas gezielt und selektiv katalytisch zu entfernen. Somit ist es vorteilhafterweise nicht erforderlich, das gesamte Phasengemisch im Produktgasstrom 5 einer Gasreinigung unterzogen werden, um gezielt das Fremdgas aus dem Phasengemisch zu entfernen. Die Phasentrennung wird durch eine Drallströmung oder Rotation bewirkt, die dem Produktgasstrom 5 durch das Drallelement 27 aufgeprägt wird, und zwar unter Ausnutzung der Separationseffekte bei der Stofftrennung analog eines Fliehkraftabscheiders. Das Phasengemisch wird durch eine gezielt aufgeprägte Rotation auf den Produktgasstrom 5 - als Träger der zu trennenden Phasen bzw. Partikel - aufgrund ihrer eigenen Strömungsgeschwindigkeit in eine Drehbewegung versetzt.

Die flüssige Phase des Wassers H₂O und die Gasphase der Produktgases werden so aufgrund der unterschiedlichen Partikelmasse bzw. der Dichteunterschiede räumlich getrennt. Eine in-situ Drall- bzw. Rotations-basierte räumliche Trennung der Phasen in dem Phasengemisch kombiniert mit einer selektiven katalytischen Gasreinigung des Produktgases ist erreicht. Die Gasreinigung erfolgt durch einen Rekombinationsprozess, indem gezielt nur das Produktgas der katalytisch aktiven Zone 7 zugeführt wird. Am Katalysator 33 rekombiniert das Produktgas mit dem Fremdgas zu Wasser, so dass das Produktgas von dem Fremdgas gereinigt und nahezu vollständig befreit ist. Von besonderem Vorteil ist, dass mit diesem Gasreinigungskonzept bei Anwendung der Wasserelektrolyse sowohl Wasserstoff als Fremdgas in dem Sauerstoff-Produktgas effizient entfernt werden kann, also auch umgekehrt Sauerstoff als Fremdgas in einem Wasserstoff-Produktgas. Der Rekombinator 15 ist somit flexibel anwendbar bzw. konfigurierbar, kostengünstig und einfach umsetzbar. Die in der katalytisch aktiven Zone 7 erzeugte Rekombinationswärme wird auf das im radial äußeren Bereich 9 strömenden Wasser H₂O übertragen wird, so dass die katalytisch aktive Zone 7 und speziell der Katalysator 33 durch die Umströmung mit dem Wasser H₂O gekühlt wird.

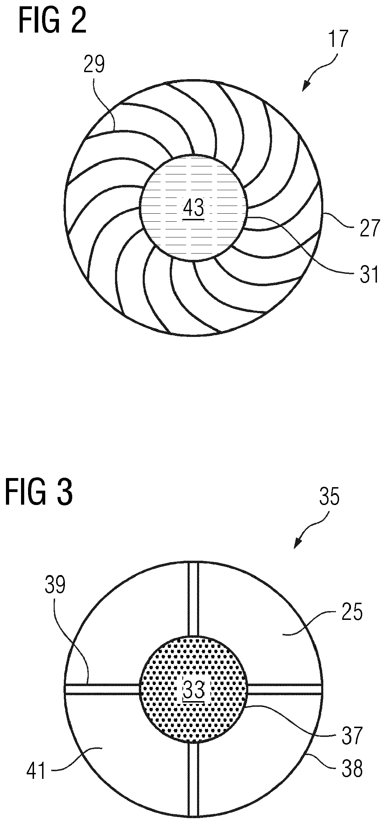

FIG 2 zeigt schematisch eine Draufsicht in Richtung der z-Achse betrachtet auf den Einströmbereich 17 des in FIG 1 gezeigten Rekombinators 15. Das Drallelement 27 weist eine Mehrzahl von über einen kreisförmigen Umfang gleichmäßig verteilten Drallschaufeln 29 auf. Diese bewirken die Aufprägung einer Rotation mit einer Tangentialkomponente auf das in den Einströmbereich 17 einströmende Fluid und die Phasentrennung, wie oben beschrieben. Ferner ist eine zentrale Öffnung 31 vorhanden, die die Quencheinrichtung 43 zeigt.

FIG 3 zeigt in vereinfachter Darstellung eine Schnittansicht des Rekombinators 15 entsprechend FIG 1 im Bereich des Befestigungselements 35. Im Strömungskanal 25 ist ein Ringraum 41 gebildet, der durch eine Außenwand 38 und eine Innenwand 37 begrenzt ist. Das Befestigungselement 35 weist vier Stege 39 auf, die symmetrisch über dem kreisförmigen Umfang angeordnet sind. Mit dem Befestigungselement 35 ist der Katalysator 33 in eine zentrale Position gebracht und entlang der z-Achse ausgerichtet und gehalten. Im Strömungskanal 25 ist dadurch ein Ringraum 41 gebildet. Im Betrieb des Rekombinators 15 wird der Ringraum 41 von Wasser H₂O zu Kühlungszwecken durchströmt. Dieses Wasser H₂O ist aus dem im Zyklon-basierten Phasentrennprozess gewonnen, das im Einströmbereich 17 in den radial äußeren Bereich 9 aus dem Phasengemisch ausgeschiedenen und gefördert wird. Dadurch ist eine sehr wirksame intrinsische Kühlung des Katalysators 33 erreicht.

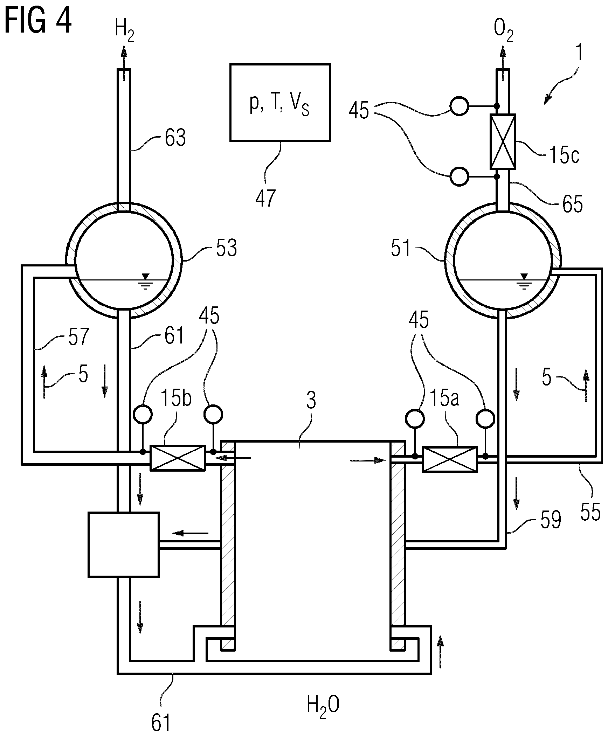

FIG 4 zeigt in einem Ausführungsbeispiel eine Elektrolyseanlage 1 zur Wasser-Elektrolyse bei der ein Rekombinator 15 gemäß der Erfindung besonders vorteilhaft zur Anwendung kommt. Bei der Wasser-Elektrolyse wird Wasser H₂O als Edukt elektrochemisch in ein Sauerstoff-Produktgas O₂ und ein Wasserstoff-Produktgas H₂ zerlegt. Für die elektrochemische Zerlegung weist die Elektrolyseanlage 1 einen Elektrolyseur 2 auf. Die Elektrolyseanlage 1 verfügt außerdem über eine sauerstoffseitige, erste Gasabscheidevorrichtung 51 sowie über eine wasserstoffseitige, zweite Gasabscheidevorrichtung 53. Der Elektrolyseur 2 ist über eine erste Produktgas-Leitung 55 mit der ersten Gasabscheidevorrichtung 51 und über eine zweite Produktgas-Leitung 57 mit der zweiten Gasabscheidevorrichtung 53 verbunden. Über die erste Produktgas-Leitung 55 wird demnach ein Phasengemisch aus Wasser H₂O und Sauerstoff O₂ transportiert. Durch die zweite Produktgas-Leitung 57 wird ein Phasengemisch aus Wasser H₂O und Wasserstoff H₂ aus dem Elektrolyseur 2 hinausgeführt. Anschließend findet in der jeweiligen Gasabscheidevorrichtung 51, 53 eine Trennung von Flüssigkeit und Produktgas statt.

Weiterhin wird über eine Wasserrückführleitung 59 Wasser H₂O aus der ersten Gasabscheidevorrichtung 51 in den Elektrolyseur 2 zurückgeführt. Das Wasser H₂O aus der zweiten Gasabscheidevorrichtung 53 wird in eine Wasserversorgungsleitung 61 des Elektrolyseurs 2 hineingeleitet.

In der Praxis enthält der Sauerstoff-Produktgasstrom 5 in der ersten Produktgas-Leitung 55 kleine Mengen an Wasserstoff H₂ und der Wasserstoff-Produktgasstrom 5 in der zweiten Produktgas-Leitung 57 enthält kleine Mengen an Sauerstoff O₂. Um diese Fremdgase aus dem jeweiligen Produktgasstrom 5 zu entfernen, müssen die Produktgase Sauerstoff O₂ und Wasserstoff H₂ jeweils aufgereinigt werden, d.h. der jeweilige Produktgasstrom 5 einer entsprechenden Gasreinigung unterzogen werden.

Zu diesem Zweck sind in der Elektrolyseanlage 1 und für deren Betrieb verschiedene Vorkehrungen getroffen, die den Rekombinator 15 der Erfindung hier besonders vorteilhaft zur Anwendung bringen. So ist in der sauerstoffseitig angeschlossenen ersten Produktgasleitung 55 unmittelbar nach dem Austritt des Produktgasstroms 5 aus dem Elektrolyseurs 3 ein Rekombinator 15a in die Produktgasleitung 55 eingebaut. Der sauerstoffseitige Produktgasstrom 5 liegt in einem ein Phasengemisch aus Wasser H₂O und dem Produktgas Sauerstoff O₂ mit einem Fremdgasanteil Wasserstoff H₂ vor. Weiterhin sind Messeinrichtungen 45 vorgesehen umfassend geeignete Sensoren oder Messfühler in der ersten Produktgasleitung 55, die in unmittelbarer Nähe zu dem Rekombinator 15a oder im Strömungskanal 25 des Rekombinator 15a an entsprechend ausgewählten und für die Messaufgabe gut geeigneten Messstellen angebracht sind. Hierdurch sind charakteristische Kenngrößen wie etwa Druck p, Temperatur T und Volumenstrom Vₛ vor und nach Durchströmen des Rekombinators 15a bestimmbar und in eine Kontrolleinheit 47 auswertbar. Damit können abgeleitete Größen wie der Anteil an Wasserstoff-Fremdgas in der ersten Produktgasleitung 55 vor uns nach dem Rekombinator 15a bestimmt werden. Weiterhin der Betriebszustand ermittelt und auch mögliche Alterungsprozesse des Rekombinators 15a diagnostiziert werden, insbesondere des Katalysators 33. Nachdem das Sauerstoff-Produktgas aus dem Elektrolyseur 3 den Rekombinator 15a durchströmt hat, ist der Produktgastroms 55 gereinigt. Der Fremdgasanteil an Wasserstoff H₂ in dem Sauerstoff-Produktgas O₂ praktisch vernachlässigbar. Nach Durchströmen des Rekombinators 15a liegt aufgrund der Vermischung von Wasser H₂O und Sauerstoff O₂ ein praktisch vollständig vom Fremdgas befreites und gereinigtes Phasengemisch vor.

In analoger Weise ist in der wasserstoffseitig angeschlossenen zweiten Produktgasleitung 57 unmittelbar nach dem Austritt des Produktgasstroms 5 aus dem Elektrolyseurs 3 ein Rekombinator 15b in die Produktgasleitung 57 eingebaut. Auch der wasserstoffseitige Produktgasstrom 5 liegt in einem Phasengemisch aus Wasser H₂O und dem Produktgas Sauerstoff H₂ mit einem Fremdgasanteil Wasserstoff O₂ vor. Weiterhin sind Messeinrichtungen 45 vorgesehen umfassend geeignete Sensoren oder Messfühler in der zweiten Produktgasleitung 57 zur Zustandsüberwachung des Produktgasstroms 5 und der Funktion des Rekombinators 15b. Das Prinzip der effizienten Reinigung des Produktgases mittels des Rekombinators 15b ist wasserstoffseitig analog zu den obigen Ausführungen zu der sauerstoffseitigen Gasreinigung durch den Rekombinators 15a. Bei beiden Rekombinatoren 15a, 15b kommt das Grundprinzip einer räumliche Phasentrennung von flüssigem Wasser H₂O und gasförmigem Produktgas mit einer selektiven katalytischen Gasreinigung durch Rekombination des jeweiligen Fremdgases zu unschädlichem Wasser H₂O. Von besonderem Vorteil ist, die Rekombinatoren 15a, 15b möglichst unmittelbar nach Austritt des Produktgasstroms 5 aus dem Elektrolyseur 3 in die jeweiligen Produktgasleitung 55, 57 strömungstechnisch zu schalten. Hier ist noch ein kompakter und weitgehend homogener Volumen- bzw. Massenstrom des Phasengemischs gegeben, was eine effektive Durchströmung der Rekombinatoren 15a, 15b und eine wirksame Gasreinigung begünstigt. Es sind aber auch andere Möglichkeiten der Positionierung eines Rekombinators 15 und vielfältige Kombinationen möglich, wie etwa nach dem Austritt eines partiellen Produktgasstroms 5 aus einem Zellverbund oder aus einem Stack umfassend eine Vielzahl von Elektrolysezellen. Diese Verschaltungsvarianten eines Rekombinators 15 an den Zellen selbst sind in FIG 4 nicht näher dargestellt.

Eine weitere Möglichkeit einer vorteilhaften Verschaltung stromab des Rekombinators 15a ist beispielhaft in FIG 4 gezeigt. So ist der sauerstoffseitigen ersten Gasabscheidevorrichtung 51 ein Rekombinator 15c nachgeschaltet, der vorteilhaft entsprechend FIG 1 ausgestaltet ist. Der Rekombinator 15c ist dabei in die sauerstoffseitige Gasauslassleitung 65 eingebaut und von dem Produktgas durchströmbar. Hier ist bereits das Wasser H₂O durch die Phasentrennung in der Gasabscheidevorrichtung 51 weitgehend, aber nicht vollständig, von dem Produktgas abgeschieden. Ein gewisser Wasseranteil oder Restfeuchte im Produktgasstrom ist auch nach Durchströmen der ersten Gasabscheidevorrichtung 51 auch in der Leitung 65 weiterhin vorhanden. Somit kenn kann eine Restfeuchte durch Abtrennen des Wasseranteils im Rekombinator 15c entfernt werden. Weiterhin können eventuell noch vorhandene Fremdgasbestandteile durch katalytische Rekombination im Rekombinator 15c abgeschieden werden, um die Reinigungseffizienz zu erhöhen und die Qualität des Sauerstoff-Produktgases.

Auch für den Fall, dass der Rekombinator 15a temporär außer Betrieb genommen wird, versagt oder ein unzureichendes Reinigungsergebnis liefert, kann diese kombinierte Verschaltung zweier Rekombinatoren 15a, 15c als Backup-Lösung sehr sinnvoll und vorteilhaft sein. Die hier gezeigte kombinierte Verschaltung auf der Sauerstoffseite einer Elektrolyseanlage 1 ist aber nicht zwingend, sondern nur exemplarisch als Option gezeigt. Auch der Rekombinator 15c ist entsprechend mit Messeinrichtungen 45 ausgestattet, so dass charakteristische Messwerte an die Kontrolleinheit 47 übergeben und ausgewertet werden können.

Es versteht sich, dass andere Ausführungsformen benutzt und strukturelle oder logische Änderungen vorgenommen werden können, ohne von dem Schutzumfang der vorliegenden Erfindung abzuweichen. So können Merkmale der hierin beschriebenen Ausführungsbeispiele miteinander kombiniert werden können, sofern nicht spezifisch anders angegeben. Die Beschreibung der Ausführungsbeispiele ist deshalb nicht in einschränkendem Sinne aufzufassen, und der Schutzumfang der vorliegenden Erfindung wird durch die angefügten Ansprüche definiert.

Der hier verwendete Ausdruck "und/oder" bedeutet bei Benutzung in einer Reihe von zwei oder mehreren Elementen, dass jedes der aufgeführten Elemente allein verwendet werden kann, oder es kann jede Kombination von zwei oder mehr der aufgeführten Elemente verwendet werden.

## Patentansprüche

1. Verfahren zum Betrieb einer Elektrolyseanlage (1) umfassend einen Elektrolyseur (3) zur Erzeugung von Wasserstoff (H₂) und Sauerstoff (O₂) als Produktgase, wobei ein Produktgasstrom (5) in einem Phasengemisch umfassend Wasser°(H₂O) sowie ein jeweiliges Produktgas mit einem Anteil eines Fremdgases gebildet wird, **dadurch gekennzeichnet, dass** wenigstens einem Produktgasstrom (5) eine Rotation aufgeprägt wird, so dass in dem Phasengemisch eine Phasentrennung von Wasser°(H₂O) und Produktgas bewirkt wird, und wobei das Produktgas einer katalytisch aktiven Zone (7) zugeführt wird, so dass Fremdgas mit dem Produktgas zu Wasser (H₂O) rekombiniert wird.

2. Verfahren nach Anspruch 1, bei dem der Produktgasstrom (5) in einer axialen Strömungsrichtung (Z)geführt wird, wobei bezogen auf die axiale Strömungsrichtung (Z) die Phasentrennung derart ausgeführt wird, dass das Wasser (H₂O) in einen radial äußeren Bereich (9) und das Produktgas in einen radial inneren Bereich (11) gefördert wird.

3. Verfahren nach Anspruch 1 oder 2, wobei in der katalytisch aktiven Zone (7) erzeugte Rekombinationswärme auf das im radial äußeren Bereich (9) strömende Wasser (H₂O) übertragen wird, so dass die katalytisch aktive Zone (7) gekühlt wird.

4. Verfahren nach einem der vorhergehenden Ansprüche, wobei eine Ausbreitung der Reaktion aus der katalytisch aktiven Zone (7) unterdrückt wird, so dass Flammenrückschläge gelöscht werden.

5. Verfahren nach einem der vorhergehenden Ansprüche, wobei die katalytisch aktive Zone (7) auf eine Aktivierungstemperatur (T_{A}) aufgeheizt wird, so dass die Rekombinationsreaktion in Gang gesetzt wird.

6. Verfahren nach Anspruch 5, bei dem die Aktivierungstemperatur (T_{A}) um 10 K bis 100 K, vorzugsweise um etwa 30 K bis 80 K, oberhalb der Temperatur des Phasengemischs des Produktgasstroms, eingestellt wird.

7. Verfahren nach einem der vorhergehenden Ansprüche, wobei ein Druck (p) und/oder eine Temperatur (T) und/oder ein Volumenstrom (Vₛ) am Eingang und/oder Ausgang der katalytisch aktiven Zone (7) ermittelt wird und wobei der ermittelte Messwert in einer Kontrolleinheit (47) verarbeitet wird.

8. Rekombinator (15) zur Reinigung eines Produktgasstroms (5) aus der Wasserelektrolyse, umfassend einen Einströmbereich (17) mit einem Einlass (19) und eine bezogen auf eine axiale Strömungsrichtung (Z) stromabwärts des Einströmbereichs (19) angeordnete katalytisch aktive Zone (7), an die sich ein Ausströmbereich (21) mit einem Auslass (23) anschließt, so dass ein Strömungskanal (25) gebildet ist, wobei in dem Einströmbereich (17) ein Drallelement (27) angeordnet ist und die katalytisch aktive Zone (7) einen Katalysator (33) aufweist, der für eine axial-mittige Durchströmung des Strömungskanals (25) mit dem Produktgas ausgelegt ist.

9. Rekombinator (15) nach Anspruch 8, umfassend ein Befestigungselement (35) mit dem der Katalysator (33) in dem Strömungskanal für eine zentral-mittige Durchströmung zentriert gehaltert ist, wobei ein Ringraum (41) für eine Umströmung des Katalysators (33) gebildet ist.

10. Rekombinator (15) nach Anspruch 8 oder 9, bei dem in der katalytisch aktiven Zone (7) eine Quencheinrichtung (43) angeordnet ist, die den Katalysator (33) einströmseitig und ausströmseitig jeweils begrenzt, so dass ein Flammenrückschlag unterdrückt ist.

11. Rekombinator (15) nach einem der Ansprüche 8, 9 oder 10, umfassend eine Messeinrichtung mit der ein Druck (p) und/oder eine Temperatur (T) und/oder ein Volumenstrom (Vₛ) am Eingang und/oder Ausgang der katalytisch aktiven Zone ermittelbar ist.

12. Rekombinator (15) nach einem der Ansprüche 8 bis 11, bei dem zur Aufheizung des Katalysators (33) ein Widerstandsheizelement (49) vorgesehen ist, das einströmseitig zwischen Quencheinrichtung (43) und Katalysator (33) angeordnet ist.

13. Rekombinator (15) nach einem der Ansprüche 8 bis 12, bei dem der Katalysator (33) ein Trägermaterial (13) auf Basis eines oxidischen Materials, insbesondere Aluminiumoxid Al₂O₃, aufweist.

14. Rekombinator (15) nach einem der Ansprüche 8 bis 12, bei dem der Katalysator (33) ein Trägermaterial (13) auf Basis eines nicht-oxidischen Materials, insbesondere Edelstahl, aufweist.

15. Verwendung eines Rekombinators (15) nach einem der Ansprüche 8 bis 14 in einer Elektrolyseanlage (1) umfassend einen Elektrolyseur (3) zur Erzeugung von Wasserstoff (H₂) und Sauerstoff (O₂) als Produktgase.

16. Verwendung nach Anspruch 15, innerhalb einer Elektrolysezelle, eines Zellverbundes oder Stacks umfassend eine Vielzahl von Elektrolysezellen.

17. Verwendung nach Anspruch 15 oder 16, in der Produktgasleitung (55, 57) nach dem Austritt des Phasengemisches aus einer Elektrolysezelle oder eines Zellverbundes oder eines Stacks umfassend eine Vielzahl von Elektrolysezellen.

18. Verwendung nach einem der Ansprüche 15 bis 17, innerhalb einer Gasabscheidevorrichtung (51, 53) einer Elektrolyseanlage (1) und/oder in einer der Gasabscheidevorrichtung (51, 53) strömungstechnisch nachgeschalteten Gasauslassleitung (61, 63) .
